Europäisches Patentamt

European Patent Office

Office européen des brevets

(19)

(11) Publication number: **0 047 566**
A2

## (12) EUROPEAN PATENT APPLICATION

(21) Application number: **81201237.5**

(22) Date of filing: **13.07.79**

(51) Int. Cl.³: **C 25 D 3/56, C 25 B 11/10, C 25 C 7/02, C 01 B 21/092, C 01 G 55/00**

(30) Priority: **14.07.78 US 924618**
**14.07.78 US 924631**
**14.07.78 US 924632**

(43) Date of publication of application: **17.03.82**
**Bulletin 82/11**

(84) Designated Contracting States: **BE DE FR GB IT NL**

(60) Publication number of the earlier application in accordance with Art. 76 EPC: **0007239**

(71) Applicant: **INCO EUROPE LIMITED, Thames House Millbank, London SWIP 40F (GB)**

(72) Inventor: **Scarpellino, Anthony Joseph, Pine Hill Road Maple Brook, Tuxedo N.Y. 10997 (US)**
Inventor: **Borner, William Gerald, 105 Kendall Drive, Ringwood NJ 07456 (US)**

(74) Representative: **Hedley, Nicholas James Matthew et al, Thames House (fifth floor) Millbank, London SWIP 4QF (GB)**

(54) A process of electrodepositing a ruthenium-iridium alloy and a bath for use therein.

(57) A process of electrodepositing a ruthenium-iridium alloy on a conductive substrate is provided which involves placing the substrate in a bath containing a soluble ruthenium compound, a soluble iridium compound, a fluoborate and fluoboric acid and making the substrate cathodic. The process is especially useful for electrodepositing a ruthenium-iridium alloy on a substrate made of a valve metal, e.g. titanium, to make an insoluble electrode.

EP 0 047 566 A2

## A process of electrodepositing a ruthenium-iridium alloy and a bath for use therein

The present invention relates to a process and a bath for electrodepositing ruthenium-iridium alloys on conductive substrates, particularly for use in producing electrodes.

It is well known to apply expensive precious metals on more readily available, cheaper, or more easily fabricated substrates to obtain products with properties attributable to the expensive surface materials. The process of the present invention may be used to plate a great variety of materials which are either conductive or can be made conductive, and the plated articles may be used for a variety of decorative or functional purposes which require properties satisfied by the deposited alloy. It has been found, for example, that the present process can be used to plate valve metals, with and without intermediate coatings, and the composite materials formed are useful in developing insoluble anodes.

Anodes made of valve metals coated with precious metals are known. The platinum group metals have been used, for example, in surface coatings and as intermediate layers. U.S. Patent Specification No. 3,775,284, for example, proposes a platinum-iridium barrier layer, and U.S. Patent Specification Nos. 3,616,445, 3,810,770, 3,846,273, and 3,853,739 show examples of proposed anodes for various uses which have an outer layer containing - in addition to ruthenium oxide and titanium oxide - iridium and/or iridium oxide. These patent specifications propose a variety of methods for depositing ruthenium-iridium coatings but none of them involve electrodeposition. It will be appreciated that coatings obtained by different methods are not identical. They may vary, for example, with respect to durability, electrical properties such as overvoltages for production of products or reactions, and reproductibility. Also, there may be material differences in the cost of producing acceptable coatings. One of the most attractive methods for depositing a coating from a standpoint of cost is by electroplating from an aqueous bath at moderate temperatures. Electroplating offers a simple and direct route which is neither time nor labour intensive. It is of interest that although it has been proposed to deposit anode coatings of precious metals by electroplating techniques, it appears that in practice it has not been found satisfactory. For example, L.D. Burke et al in an article in J.C.S. FARADAY I, Vol. 73, No. 11, pp. 1659-1849 (1977), entitled "The Oxygen Electrode" states that $RuO_2$-coated electrodes are usually prepared by heating $RuCl_3$-painted titanium in air for several hours, and also that electrodeposited coatings were investigated and found unsatisfactory.

Several baths have been developed for electroplating ruthenium and for electroplating iridium. Examples of ruthenium electroplating baths can be found in U.S. Patent Specification Nos. 2,057,638, 2,600,175, 3,123,544, 3,576,724, 3,630,856, 3,793,162 and 4,082,625. Examples of iridium plating baths can be found in U.S. Patent Specification Nos. 1,077,920, 3,554,881, 3,639,219, in Lowenheim's MODERN ELECTROPLATING, 3rd Ed., pp. 354-355 (1974), and in an article by G.A. Conn entitled, "Iridium Plating" in PLATING PROCEEDINGS, pp. 1258-1261, (1965).

In general, ruthenium is considered more difficult to plate than platinum and palladium, and in turn iridium is considered more difficult to plate than ruthenium. Baths for the electrodeposition of certain alloys of ruthenium have also been disclosed, e.g., for Ru-Rh, Ru-Pt, and Ru-Pd in U.S. Patent Specification No. 3,692,641 and for Rh-Ru in U.S. Patent Specification No. 3,892,638. None of the documents noted above discloses a bath for co-depositing ruthenium and iridium.

According to the present invention there is provided a process in which a ruthenium-iridium alloy is electrodeposited from a bath comprising an aqueous solution containing a soluble ruthenium compound and a soluble iridium compound, a soluble fluoborate salt and fluoboric acid.

It has in general been found that an electrodeposition process using a bath containing controlled amounts of both a soluble fluoborate and fluoboric acid can form adherent, coherent, reproducible ruthenium-iridium alloy co-deposits containing controlled amounts of iridium. Such baths are generally long lasting and stable over a wide ratio of ruthenium-iridium compositions and the process can be operated to form deposits which are substantially crack-free on visual examination and at a magnification of 500X at deposit thickness equivalent to a loading of about 2 $mg/cm^2$.

The baths used in the process of the present invention are aqueous solutions of the soluble ruthenium and iridium components and a soluble fluoborate salt, fluoboric acid, and the bath can also optionally contain sulphamic acid. In general, the baths can conveniently contain:

- 4 -

0047566

| Ingredient | g/l |
|---|---|
| Ru | 1 - 12 |
| Ir | 1 - 12 |
| $NaBF_4$* | 10 - 200 |
| $HBF_4$ | 1 - 100 |
| $NH_2SO_3H$ | 0 to 2 times the Ru-Ir Conc. |

(*or equivalent fluoborate salt)

The bath may additionally contain other additives well known in the art: for example boric acid and/or doping agents. Boric acid is known to prevent hydrolysis of $HBF_4$ to HF.

Advantageously, the process can be operated to give the desired levels of iridium in the alloy deposited by a suitable choice of bath composition ranging from very small but effective amounts of iridium, e.g. to improve the quality of the deposits and/or corrosion resistance, up to about 36 weight percent. The fluoborate salt and the fluoboric acid used are major factors in controlling the level of iridium in the deposit and in controlling the quality of the deposit. The concentrations of such components used for such control are interrelated to each other and to the precious metal concentrations in the bath.

The fluoborate salt functions at least as a current carrier in the bath and it can be used to regulate the viscosity of the bath. It also affects the quality of the deposit, as will be shown below. The fluoborate salt can be, e.g., an alkali metal or ammonium fluoborate. Preferably, for reasons of cost, sodium fluoborate is used. Based on sodium fluoborate, the concentration of fluoborate salt is preferably equivalent to 10 g/l to 200 g/l sodium fluoborate, although the actual amount used will depend on the compositional design of the bath, but in general the bath will contain at least 25 g/l equivalent of fluoborate salt. For a process producing electrodeposits containing about 2-4 weight percent iridium in the alloy, the bath will preferably contain 25 to 150 g/l, e.g., about 100 g/l fluoborate. Suitably, the bath will have a density of about 1.043 to 1.038 $g/cm^3$ (6 to 8Bé$^{\circ}$).

The fluoboric acid level can be used to control the level of iridium in the deposit. Its presence also improves the quality of the deposits. Without fluoboric acid, deposits are severely cracked. When added, the cracks are reduced materially. In general the amount of/fluoboric acid used is from 1 to 100 g/l. Preferable amounts will depend on the design of the bath for a particular deposit. To obtain 2-4 weight percent iridium in the deposit, the bath used will preferably contain at least 5 g/l, e.g. 5 to 50 g/l, more preferably 10 to 40 g/l fluoboric acid.

Preferably the ruthenium compound used in the process of the present invention is a salt containing ruthenium in the form of a complex anion $Ru_2N(H_2O)_2Y_8^{3-}$ (often referred to as RuNC) e.g., the ammonium salt, $[Ru_2N(H_2O)_2Y_8](NH_4)_3$, wherein Y = either a chloro or bromo group. Examples of other ruthenium salts that may be used are halides and sulphamates.

Preferably the iridium compound used in the process of the present invention is prepared by a process described in U.S. Patent Specification No. 4,174,378, that is to say, by refluxing a diammonium hexahalo salt of iridium and sulphamic acid in an aqueous environment for a period
of time sufficient to permit, after distillation and
cooling of the refluxing product, the formation of a
precipitate. Use of $(NH_4)_2IrCl_6$ as the diammino-
hexahalo salt in the preparation of the soluble iridium
compound generally requires a refluxing time of at least
30 hours, for example, at least about 50 hours or above 70
hours following which an olive green precipitate is
formed after distillation and cooling. The precipitate
is preferably washed throughout, for example until it is
substantially uniformly green in colour. The iridium
product is soluble in water to some extent and to minimise
dissolution the washing is preferably carried out below
room temperature, for example between 0 and 5°C. The
iridium product has a melting point above 350°C.
Differential thermogravimetric analysis (DTG) in air
shows that the product has a weight loss of about 46%
from room temperature to 600°C. DTG analysis on $(NH_4)_2$
$IrCl_6$ shows about a 61% weight loss under the same
conditions. Examples of other iridium compounds that may
alternatively be employed in the baths are iridium
sulphamates and iridium halides.

While the process of the present invention may use
a bath containing relatively large amounts of ruthenium
and iridium, it is preferred to keep the precious metal
content of the bath at a low level. This will prevent the
loss of metal due to drag out and in addition it is less
costly to operate with lower precious metal inventories.
Preferably, the ruthenium and iridium contents are both
less than 12 g/l and preferably from 3 to 10 g/l. The
ratio of ruthenium to iridium in the bath, surprisingly, can be varied widely without affecting the ratio of iridium in the deposit. Since the process of the present invention deposits ruthenium at a faster rate than iridium, the process may be used to electrodeposit a particular alloy composition even though the bath composition is changing. In general, however, the initial bath can usefully contain ruthenium and iridium in approximately a 1:1 weight ratio. The bath can be replenished as necessary by adding a solution with ruthenium and iridium in concentrations equivalent to the composition of the deposit.

Sulphamic acid serves as a stress reliever of the deposit. It is optional, but preferably present in the bath in a ratio of from 0.1:1 up to 2:1 of sulphamic acid:total weight Ru+Ir and preferably this ratio is about 0.5:1.

The process of the present invention can be carried out at a temperature in the range of room temperature up to 95°C, preferably 50 to 70°C and at a cathode current density of about 5 to 120 mA/cm$^2$, preferably about 20 to 100 mA/cm$^2$.

The pH of the bath used in the process is important. If it is not maintained within certain tolerable limits, iridium will not co-deposit. The optimum pH range is 0.3 to 1.5, preferably 0.9 to 1.3. The pH is maintained, advantageously, with fluoboric acid and/or sulphamic acid.

The electrodeposition process of the present invention can be operated at such conditions to co-deposit iridium and ruthenium containing 0.1 to 36% iridium. As indicated above, the bath can be designed to provide a specific iridium content in the deposited alloy.

Major advantages of the process of the present invention are that reproducible coatings can be deposited over wide ranges of Ru:Ir ratios in the bath, the baths can be operated for a longer period of time without adjustment, the iridium level can be controlled at a low but effective level for a desired effect and that iridium can be co-deposited with ruthenium. Moreover, adherent and coherent ruthenium-iridium alloys can be deposited.

The ruthenium-iridium deposits produced in the process usefully have a thickness of 0.1 to 5 $\mu$m, preferably 0.5 to 2 $\mu$m, and an optimum thickness of about 1 $\mu$m. Thicknesses below 0.1 $\mu$m tend not to be continuous and too much of the substrate is exposed.

The present invention also provides an electrode produced by the process and an aqueous electrolytic bath for use in the process. The composition of this bath is described above in connection with the process.

Some Examples are now given to illustrate the present invention. Example 1 describes the production of a novel iridium compound for use in the process of the present invention and Examples 2 to 8 describe the operation of the process of the present invention.

## EXAMPLE 1

A.    25 g of $(NH_4)_2IrCl_6$ and 60 g of $NH_2SO_3H$ were dissolved in 600 $cm^3$ of distilled water. The solution was refluxed continuously for 71 hours. Then 550 $cm^3$ of the refluxed solution was distilled off. The distillate was a clear, colourless solution which gave a positive test for $Cl^-$ ion when $AgNO_3$ was added. The remainder of the solution was dark murky green, which upon cooling produced a thick precipitate, which was collected on filter paper and washed several times with ice water. After air drying, it was transferred to a desiccator to dry and resulted in approximately 11 g of an olive green salt. The filtrate and rinse water will yield more of this green salt, but only after considerable standing or by reduction of the volume by another distillation. The iridium contents of two different preparations were 44.4% and 45.1%. X-Ray diffraction analysis of these salts gave a similar pattern, which was different to that of $(NH_4)_2IrCl_6$, the starting material. It appears from the infrared spectrograph of the green salt that $H_2O$ is present, but no Ir-N-Ir bridge. Chemical analysis shows it to contain 44.4% Ir, 41.1% Cl, 5.3% N, 5.1% O, 4.12% $NH_4$, 0.71% $H_2O$, and the presence of H. No S is present. Its melting point is above 350°C.

B. The above procedure was repeated except that the solution of diammonium hexahalo iridium (IV) in sulphamic acid was refluxed for only 30 hours. X-ray diffraction analysis on a black precipitate obtained after distillation and filtration showed it to be the diammino iridium salt, i.e. the diammonium iridium salt did not react in this time period.

<center>EXAMPLE 2</center>

This Example illustrates the effect on the process of iridium concentration in the bath.

To an aqueous bath containing 2 to 3 g/l of $[Ru_2N(H_2O)_2Cl_8]$ $(NH_4)_3$ (known as Ru NC) the reaction product of the refluxed diammonium hexachloro iridium IV salt, as prepared in Example 1, was added in amounts to make up baths containing apporximately 10%, 20%, 30%, 40%, 50%, 70% and 90%, by weight of iridium. At a plating temperature of 55°C, and a current density of 20 mA/cm$^2$ it was found that at a concentration of about 45% iridium in the bath, the level of iridium in the alloy deposit reached a maximum of about 15% by weight. Thereafter, the percentage of iridium in the deposit levelled off. Increasing the amount of iridium over 45 weight percent in the bath tested, did not therefore increase the amount of iridium in the deposit.

## EXAMPLE 3

This Example illustrates the relationship between the iridium, fluoborate, and fluoboric acid contents of the baths used in the process and the level of iridium in the deposited alloys.

A series of plating baths were prepared as aqueous solutions containing ruthenium, iridium, sodium fluoborate, fluoboric acid and sulphamic acid. All baths were prepared using the iridium salt made as described in Example 1 and $/\overline{Ru}_2N(H_2O)_2Cl_{8-}\overline{/}$ $(NH_4)_3$, to give a 1 to 1 weight ratio of ruthenium and iridium in the baths; the sulphamic acid concentration in each bath was 6 to 7 g/l but the other bath components were varied relative to each other. The baths had an initial pH of from about 1.2 to 0.5 and deposits of ruthenium-iridium alloys were produced at $55°-60°C$ and 20 $mA/cm^2$ on a copper substrate using a platinum anode. The deposited alloys were analyzed for iridium content by X-ray fluorescence. The results are tabulated in Tables I and II.

Table I shows the effect of variations in iridium and fluoboric acid concentrations in baths containing 25 g/l $NaBF_4$. Table II shows the effect of variations in iridium and fluoboric acid concentrations in the baths at various levels of $NaBF_4$.

## TABLE I

$NaBF_4$ = 25 g/l

Ru:Ir = 1:1

| Test | Bath Ir/$HBF_4$ Weight Ratio | | Deposit Ir in Alloy w/o* |
|------|------|------|------|
| A | 3.08 / .66 | 4.65 | 16.6 |
| B | 3.08 / 10.46 | 0.29 | 4.0 |
| C | 6.16 / 10.46 | 0.59 | 9.4 |
| D | 6.16 / 20.3 | 0.30 | 2.1 |

* percentage by weight

## TABLE II

| Test | Bath | | | Deposit |
|------|------|---|---|---------|
| | $Ir/HBF_4$ Weight Ratio | | $NaBF_4$ g/l | Ir in Alloy w/o* |
| A | $\frac{3.08}{0.66}$ | 4.65 | 25 | 16.6 |
| B | $\frac{3.08}{10.46}$ | 0.29 | 25 | 4.0 |
| E | $\frac{3.08}{3.31}$ | 0.93 | 50 | 14.8 |
| F | $\frac{3.08}{13.11}$ | 0.23 | 50 | 6.8 |
| G | $\frac{3.08}{21.46}$ | 0.14 | 50 | 3.4 |
| H | $\frac{3.08}{4.39}$ | 0.70 | 75 | 23.2 |
| I | $\frac{3.08}{14.0}$ | 0.22 | 75 | 8.1 |
| J | $\frac{3.08}{33.50}$ | 0.09 | 75 | 6.0 |
| K | $\frac{3.08}{0.33}$ | 9.29 | 100 | 17.4 |
| L | $\frac{3.08}{9.60}$ | 0.32 | 100 | 5.4 |
| M | $\frac{3.08}{39.02}$ | 0.08 | 100 | 1.8 |

* percentage by weight

The data in Tables I and II show the interrelationship of the concentrations Ir, $NaBF_4$ and $HBF_4$, and from such data a bath composition can be optimized to give the desired deposit for a particular application.

### EXAMPLE 4

Plating baths were prepared using ruthenium and iridium components prepared as described in Example 2, and with the ruthenium and iridium in a weight ratio of 1 to 1, to give ruthenium-iridium deposits containing various amounts of iridium. Typical baths and plating conditions are shown in Table III.

### TABLE III

|  |  | Bath | | | |
|---|---|---|---|---|---|
|  |  | I | II | III | IV |
| A | COMPOSITION, (g/l) | | | | |
|  | Ru | 8-9 | 8-9 | 3-4 | 3-4 |
|  | Ir | 8-9 | 8-9 | 3-4 | 3-4 |
|  | $NaBF_4$ | 100 | 100 | 75 | 75 |
|  | $HBF_4$ | 30 | 20 | 14 | 4 |
|  | $NH_2SO_3H$ | 7 | 7 | 6-7 | 5-7 |
| B | PLATING CONDITIONS | | | | |
|  | current density (mA/cm$^2$) | 30 | 30 | 20 | 20 |
|  | T (°C) | 70 | 70 | 60 | 60 |
|  | pH | 0.9 | 0.8 | 0.9 | 1.2 |
| C | Ir IN DEPOSIT | | | | |
|  | % by weight | 3-4 | 5-6 | 8-9 | 23-24 |

### EXAMPLE 5

This Example illustrates the effect of current density and temperature on the iridium content of the deposit.

Using a bath of the following composition

| Ingredients | g/l |
|---|---|
| Ru | 1-2 |
| Ir | 1-2 |
| $NaBF_4$ | 100 |
| $HBF_4$ | 10 |
| $NH_2SO_3H$ | 7 |

the plating conditions were varied, e.g.:

A at a temperature of $60^{\circ}C$ and pH of 1.0, varying the cathode current density from $1-100$ $mA/cm^2$

B at a cathode current density of 30 $mA/cm^2$, varying the temperature from 20 to $70^{\circ}C$.

Results tabulated in Tables IV and V show that the % iridium deposited increases with both increase in temperature and increase in current density, respectively.

### TABLE IV

| Current Density $(mA/cm^2)$ | Iridium in Deposit (w/o)* |
|---|---|
| 10 | 0.7 |
| 20 | 1.1 |
| 30 | 1.6 |
| 40 | 1.8 |
| 50 | 2.2 |
| 60 | 2.7 |
| 70 | 3.0 |
| 80 | 3.7 |
| 90 | 3.8 |
| 100 | 4.7 |

* percentage by weight

## TABLE V

| Temperature (°C) | Iridium in Deposit (w/o)* |
|------------------|---------------------------|
| room temperature | 0.1 |
| 38 | 0.1 |
| 46 | 1.1 |
| 56 | 2.5 |
| 70 | 6.6 |

* percentage by weight

## EXAMPLE 6

This Example illustrates the use of various ruthenium and iridium salts as components of the bath.

In the tests outlined below the specific ruthenium and iridium salts used to prepare the bath, the bath composition and plating conditions are given. All deposits are on a copper substrate. In all test samples the ruthenium-iridium alloy deposit is heat treated in air for 15 minutes at 593°C before use in an accelerated life test. The results include the concentration of iridium in the ruthenium-iridium alloy deposit and observations on the quality of the deposits. "cd" is the current density and "ALTC" refers to accelerated life test which is carried out at 500 mA/cm$^2$ at ambient temperature in 1N $H_2SO_4$. The life is based on hours to 10 v cell voltage and the results given related to the precious metal loading.

1.   Salts:   $RuCl_3 \cdot 3H_2O$ and $(NH_4)_2IrCl_6$

    A   Bath Composition

        Ru       = 3-4 g/l Ir       = 3-4 g/l

        $NaBF_4$   = 100 g/l

        $HBF_4$    = 10 g/l

        $NH_2SO_3H$ = 6-7 g/l

B   Plating Conditions

$$cd = 20 \text{ mA/cm}^2$$

$$T = 60^{\circ}C$$

$$pH = 0.5$$

C   Results

1.  [Ir] in alloy = 7.0 %

2.  The deposit was <u>not</u> adherent

Salts:   $RuCl_3 \cdot 3H_2O$ and $IrCl_3$

A   Bath Composition

$$Ru = 3-4 \text{ g/l}$$

$$Ir = 3-4 \text{ g/l}$$

$$NaBF_4 = 100 \text{ g/l}$$

$$HBF_4 = 10 \text{ g/l}$$

$$NH_2SO_3H = 6-7 \text{ g/l}$$

B   Plating Conditions

$$cd = 20 \text{ mA/cm}^2$$

$$T = 60^{\circ}C$$

$$pH = 0.7$$

C   Results

1.  [Ir], in alloy = 26-1/2%

2.  Light, very shiny deposit, finely cracked at 500X at 1.4 $\text{mg/cm}^2$ loading.

3.  ALTC:   55 hr/mg.

3.  Salts:   RuNC and $IrCl_3$

A   Bath Composition

$$Ru = 3-4 \text{ g/l}$$

$$Ir = 3-4 \text{ g/l}$$

$$NaBF_4 = 100 \text{ g/l}$$

$$HBF_4 = 10 \text{ g/l}$$

$$NH_2SO_3H = 6-7 \text{ g/l}$$

B    Plating Conditions

cd  =  20 mA/cm$^2$

T   = 60°C

pH  =  0.9

C    Results

1.    [Ir], in alloy  =  21.3%

2.    Matte-grey deposit, under 500X, nodular in appearance.

3.    ALTC:  426 hrs/mg.

4.    Salts:   RuNC and $(NH_4)_2IrCl_6$

A    Bath Composition

Ru        =  3-4 g/l Ir        =  3-4 g/l

$NaBF_4$      =  100 g/l

$HBF_4$       =  10 g/l

$NH_2SO_3H$  =  6-7 g/l

B    Plating Conditions

cd  =  20 mA/cm$^2$

T   = 60°C

pH  =  0.9

C    Results

1.    [Ir], in alloy = 1.7%

2.    Deposit metallic

3.    White turned light violet when treated

4.    ALTC:  25 hrs/mg

The results are included merely to indicate that iridium does plate out with ruthenium using a variety of compounds of iridium and ruthenium.  However, it should be noted that the examples do not represent optimized baths for use in the process of the present invention.

## EXAMPLE 7

Baths were prepared and deposits made substantially as described in Example 3, except that the deposits are made on titanium. The composite Ru-Ir on Ti materials were treated at $593^\circ C$ in air for 15 minutes and then subjected to a screening test (ALTC) in 1N $H_2SO_4$ at ambient temperature and an anode current density of 500 mA/cm$^2$. Results are tabulated in Table VI, which gives variations in compositions of the baths, w/o iridium in the deposits and the hours to 10 volts cell voltage in the screening test.

TABLE VI

| | | Bath | | Deposit | Performance |
|---|---|---|---|---|---|
| | | Ir/HBF$_4$ | NaBF$_4$ | Ir in Alloy | ALTC |
| Test | Weight Ratio | | g/l | w/o* | Hours to 10 Volts |
| N | 3.08 9.27 | 0.33 | 0 | 7.8 | 15 |
| O | 3.08 10.46 | 0.29 | 25 | 4.0 | 91 |
| P | 3.03 13.11 | 0.23 | 50 | 6.8 | 90 |
| Q | 3.08 14.10 | 0.22 | 75 | 8.1 | 112 |
| S | 1.38 9.8 | 0.14 | 150 | 11.0 | 178 |
| T | 1.38 9.8 | 0.14 | 200 | 12.0 | 27 |

* percentage by weight

Generally, for every given Ir/HBF$_4$ ratio, as the concentration of NaBF$_4$ increases the w/o Ir in the alloy deposit increases. However, the performance of deposits as anodes goes through a maximum at about 100 g/l NaBF$_4$.

This suggests that the level of $NaBF_4$ in the bath should be controlled, e.g. at about 100 g/l, for optimum performance when the deposit from the bath is to be used as an anode material in particular.

## EXAMPLE 8

A titanium substrate was sandblasted with No 2 sand to roughen the surface and to prime the surface with embedded silica. The sandblasted substrate was brushed with pumice, rinsed, cathodically cleaned in 0.5 M $Na_2CO_3$ to remove dirt and adhering pumice particles, rinsed dried and weighed. Before plating the surface was water-rinsed and placed in the following plating bath prepared using the ruthenium and iridium components described in Example 2:

| Ingredients | g/l |
|---|---|
| Ru | 3-4 |
| Ir | 3-4 |
| $NaBF_4$ | 25 |
| $HBF_4$ | 10 |
| $NH_2SO_3H$ | 6-7 |
| $H_3BO_3$ | 10 |

Plating was carried out at a temperature of $60^{\circ}C$, pH = 1, and a current density of 20 $mA/cm^2$ to form a coherent, adherent co-deposit of ruthenium and iridium as an alloy containing 12 weight percent iridium and having a loading of about 1 $mg/cm^2$. The deposit was bright metallic.

The Ru-Ir coated titanium was heat treated in air for 15 minutes at $593^{\circ}C$ to oxidize at least the surface of the co-deposit. This initial oxidation was evidenced by a colour change from metallic to light violet.

After oxidation the electrode was tested at conditions which simulate nickel electrowinning at high temperature.  The electrolyte was made up of 60 to 80 g/l nickel (as nickel sulphate), 40 g/l sulphuric acid, 100 g/l sodium sulphate and 10 g/l boric acid. With the electrolyte temperature at $70^{\circ}C$, the pH of about 0 to 0.5 and at an anode current density of about 30 $mA/cm^2$, the life of the electrode was over 3600 hours at a working potential of 1.27-1.31 volts/SCE.

Further Examples of the use of electrodes that contain a ruthenium-iridium electrodeposit produced by the process of the present invention can be found in the Specification of European Patent Application No. 79 301393.9 (Publication No. 7239).

## Claims

1.    A process which comprises electrodepositing a ruthenium-iridium alloy from a bath comprising an aqueous solution containing a soluble ruthenium compound, a soluble iridium compound, a soluble fluoborate salt and fluoboric acid.

2.    A process according to claim 1, characterised in that the ruthenium compound of the bath is a salt containing ruthenium in the form of the complex anion $[Ru_2 \ N(H_2O)_2 \ Y_8]^{3-}$ wherein Y is Cl or Br.

3.    A process according to claim 1 or claim 2, characterised in that the iridium compound of the bath is one prepared by refluxing a diammonium hexahalo salt of iridium and sulphamic acid in an aqueous environment for a period of time sufficient to permit, after distillation and cooling of the refluxing product, the formation of a precipitate.

4.    A process according to any one of claims 1 to 3, characterised in that the bath contains at least 5 g/l of fluoboric acid.

5.    A process according to any one of claims 1 to 4, characterised in that the bath contains at least 25 g/l sodium fluoborate or an amount of another fluoborate salt that gives an equivalent concentration of fluoborate ions.

6.    A process according to any one of claims 1 to 5, characterised in that the bath additionally contains sulphamic acid.

7.    A process according to any one of claims 1 to 6, characterised in that the pH of the bath is from 0.3 to 1.5.

8.    A process according to any one of claims 1 to 7, characterised in that the bath additionally contains boric acid.

9.    An electrode comprising a valve metal substrate
and an electrodeposited layer of ruthenium-iridium
alloy produced according to the process claimed in any
one of claims 1 to 8.

10.   The aqueous electrolytic bath specified in any
one of claim 1 to 8.